Europäisches Patentamt

(19) European Patent Office

Office européen des brevets

(11) Numéro de publication: **0 077 861**
**B1**

(12) **FASCICULE DE BREVET EUROPEEN**

(45) Date de publication du fascicule du brevet: **04.01.89**

(51) Int. Cl.⁴: **B 65 D 83/06, A 47 K 5/10**

(21) Numéro de dépôt: **81430034.9**

(22) Date de dépôt: **27.10.81**

(54) **Dispositif doseur-distributeur notamment de produits en poudre.**

(43) Date de publication de la demande:
**04.05.83 Bulletin 83/18**

(45) Mention de la délivrance du brevet:
**04.01.89 Bulletin 89/01**

(84) Etats contractants désignés:
**AT BE CH DE GB IT LI LU NL SE**

(56) Documents cités:
**FR-A-1 237 209**
**US-A-3 193 159**
**US-A-3 458 092**
**US-A-4 085 870**

(73) Titulaire: **Galopin, Fernand**
**11, Bd. Albert 1er**
**Monaco (MC)**

(72) Inventeur: **Galopin, Fernand**
**11, Bd. Albert 1er**
**Monaco (MC)**

(74) Mandataire: **Hautier, Jean-Louis**
**OFFICE MEDITERRANEEN DE BREVETS**
**D'INVENTION 24 rue Masséna**
**F-06000 Nice (FR)**

Courier Press, Leamington Spa, England.

## Description

La présente invention est relative à un distributeur-doseur, du type correspondant au préambule de la revendication 1 (US—A—3193159), notamment pour les produits en poudre utilisés dans les distributeurs de savon et les distributeurs automatiques de boissons.

On connaît les appareils distributeurs automatiques de boissons. Ils permettent d'obtenir un gobelet de boisson en échange d'une ou plusieurs pièces de monnaie. Ce breuvage est souvent obtenu en délayant une dose de poudre déshydratrée dans de l'eau chaude ou froide. Toutes ces opérations sont automatiques et l'appareil est notamment équipé d'un dispositif qui permet la distribution et le dosage de cette poudre.

Les distributeurs-doseurs de type connu ne permettent pas un dosage précis de la quantité de poudre délivrée. Ainsi, le goût du breuvage obtenu est soit trop fort, soit trop fade, ce qui provoque le mécontentement de l'utilisateur.

Le plus souvent, la poudre tombe par gravité dans un tiroir doseur, placé au-dessous de l'orifice d'évacuation du récipient distributeur: au fur et à mesure de son utilisation, la poudre peut former une voûte au-dessus de cet orifice, provoquant ainsi une panne de l'appareil de distribution. Ce phénomène est surtout sensible quand la poudre est légèrement humide.

La plupart de ces distributeurs-doseurs de type connu, ne peuvent pas s'adapter à tous les types d'appareils de distribution. Ces appareils proposent un grand choix de boissons différentes et sont souvent disposés à côte d'appareils identiques pour pouvoir satisfaire plusieurs clients simultanément. Le préposé à ces machines doit donc regarnir un grand nombre de dispositifs. Il est important qu'il puisse le faire rapidement et d'une façon propre; notamment, il doit regarnir les distributeurs-doseurs sans renverser de poudre déshydratée.

L'état de la technique peut être défini par les brevets suivants: FRA.1.237.209. US—A—4.085.870, US—A—3.458.092 et US—A—3.193.159.

Le brevet FR—A—1.237.209 Lamontagne décrit un emballage qui est conçu de manière à intégrer, à sa base, un distributeur-doseur. Ce distributeur-doseur comporte une séparation intérieure *b* avec un orifice *e* séparant le tiroir doseur et le produit; une ouverture, sur la face verticale de l'emballage *a*, permet le coulissement du tiroir-doseur dans sa gaine, une ouverture *f* à la base inférieure où s'écoule le produit que contient la cavité du doseur; un tiroir-doseur, intégré à la base de l'emballage, comporte une paroi extérieure *h* verticale, munie d'une languette *j*, nécessaire à l'usager pour permettre de faire coulisseur le tiroir. Le tiroir-doseur comporte des cloisons verticales qui déterminent la contenance de la cavité avec les faces latérales du tiroir. Ce dispositif Lamontagne comporte de nombreux inconvénients, notamment le fait que, si un peu de produit tombe dans le logement du tiroir-doseur, ce produit empêche complètement le tiroir de fonctionner.

Le brevet US—A—4.085.870 Von Holdt vise surtout l'invention d'un tiroir à compartiments variables au moyen de cloisons intermédiaires cassables ou amovibles. Ce tiroir est muni d'une face supérieure qui, lorsque le tiroir est en position ouverte, obture le passage entre le conteneur de produit et l'extérieur. Dans ce brevet, il est décrit que le conteneur 12, en matière plastique ou en carton, vient s'emboîter autour des cloisons 28, 36 et 34, auxquelles le conteneur doit être soudé ou collé. L'étanchéité du dispositifi Von Holdt dépend donc essentiellement de la qualité du collage ou de la soudure. Le tiroir-doseur Von Holdt coulisse dans un demi-logement qui n'est pas entièrement clos lorsque le tiroir est en position fermée; l'étanchéité n'est donc pas parfaite. De même qui pour le brevet Lamontagne, le brevet Von Holdt est perturbé dans la mesure où le produit tombe dans le logement du tiroir-doseur qui lui sert de guide.

Le brevet US—3.458.092 décrit un distributeur-doseur utilisant une trappe basculante. Il est donc obligatoire qu'il y ait une tolérance entre la face supérieure du tiroir côté poignée et le fond du container; l'étanchéité n'est donc pas assurément garantie.

Le brevet US—A—3.193.159 décrit au distributeur-do seur correspondant au préambule de la revendication 1 mais qui, neau moins, ne peut pas s'adapter a n'im porte quel appareil de distribution.

La présente invention a pour but de réaliser un dispositif doseur-distributeur de poudre:

qui permette un dosage précis de la quantité de poudre délivrée;

qui puisse s'adapter à n'importe quel appareil de distribution;

qui puisse être regarni rapidement sans perte de poudre

qui permette d'éviter la formation d'une voûte dans la poudre au fur et à mesure de son utilisation.

Le dispositif doseur-distributeur, notamment pour des produits en poudre, est forme selon le préambule de la revendication 1 (US—A—3.193.159) par un emballage ou récipient qui contient le produit et un distributeur tiroir-doseur placé sous le récipient et communiquant avec lui par une ouverture centrale. Le déplacement d'un tiroir à l'intérieur du tiroir-doseur permet le remplissage du tiroir par simple gravité. Le tiroir-doseur comporte un soubassement, divisé en deux compartiments par une paroi intérieure, situé dans un plan parallèle au fond et renfermant l'ouverture centrale, le premier compartiment comportant une paroi cylindrique constituant le prolongement de l'ouverture centrale et faisant saillie à l'extérieur, la dimension interne de la paroi cylindrique permettant d'emboîter dans celle-ci l'emballage ou le récipient du type connu qui contient le produit à distribuer, le tiroir étant placé dans le second compartiment placé au-dessous du premier compartiment et comportant un élément permettant un déplacement manuel du tiroir. Ces caractéristiques techniques font partie de l'état de la technique tel que de'crit dans US—A—3.193.159.

Selon la partie caractérisante de la revendication 1. Cet élément est une nervure de préhension qui fait saillie et qui est actionnée par traction, tandis qu'à la surface opposée à la nervure de préhension, le soubassement est percé d'un orifice circulaire au niveau du deuxième compartiment permettant le passage et le coulissement d'un doigt d'un dispositif pousseur installé derrière le soubassement sur le distributeur automatique.

Le doigt du dispositif pousseur exerce une pression sur un autre doigt disposé sur la paroi arrière dudit tiroir, ce doigt fait saillie à l'extérieur et obstrue l'orifice lorsque le tiroir est en position fermée.

Le tiroir qui est guidé par deux réglettes, comporte trois logments et peut prendre deux positions extérieures:

une position "fermée", le tiroir étant à l'intérieur du compartiment et le logement se plaçant dans la partie arrière du compartiment,

une position "ouverte", les logements étant à l'extérieur du compartiment.

Le tiroir étant en position fermée, le compartiment communique avec le logement par l'ouverture centrale. Une paroi plane ou bombée, délimitée par la paroi cylindrique est située au-dessus de l'ouverture centrale, celle-ci possédant de la sorte une forme semi-circulaire.

Le dispositif distributeur doseur, selon l'invention, comporte les caractéristiques énoncées dans la revendication 1. Des caractéristiques préférées sont énoncées dans les revendications 2 et 3.

Les dessins ci-joints sont donnés à titre d'exemple indicatif et non limitatif qui permettront de mieux comprendre les caractéristiques de l'invention.

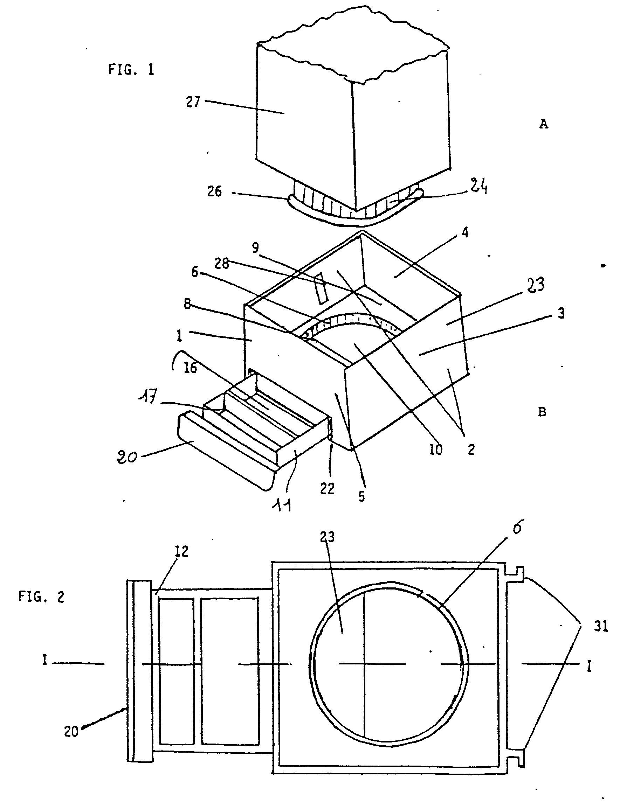

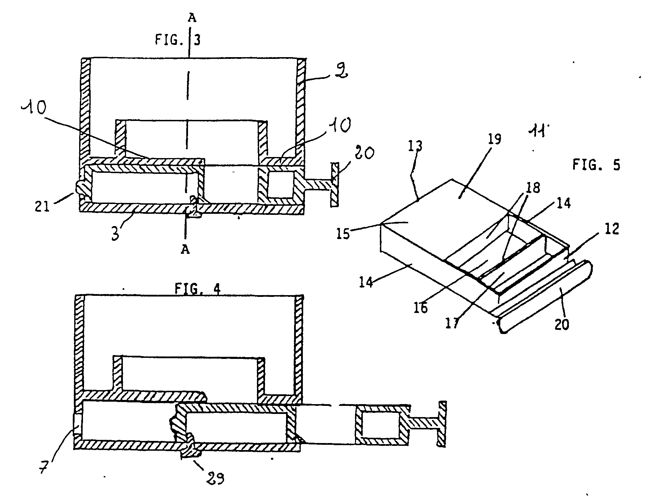

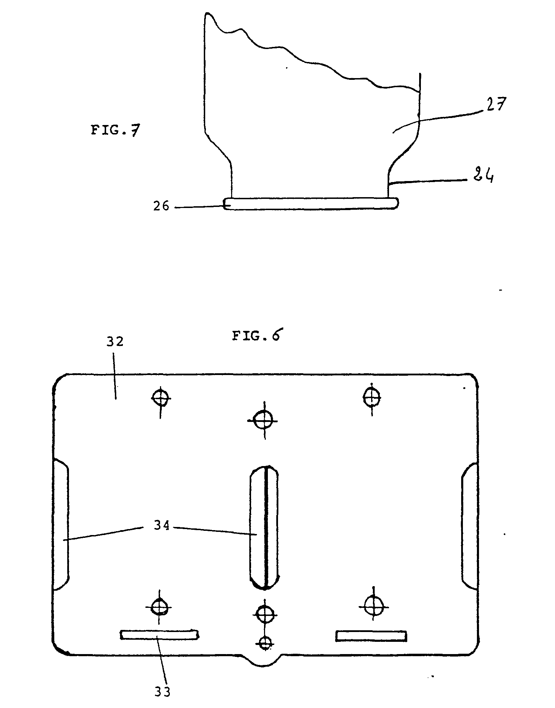

La figure 1 est une vue en perspective du distributeur-doseur selon l'invention; la figure 2 est une vue de dessus de ce dispositif; la figure 3 est une vue en coupe suivant figure 2 I—I, le tiroir étant en position "fermée"; la figure 4 est une vue en coupe suivant figure 2 I—I, le tiroir étant en position "ouverte"; la figure 5 est une vue en perspective du tiroir selon l'invention; la figure 6 est une vue en plan de la plaquette d'adaptation; la figure 7 est une vue d'un emballage de l'appareil distributeur mettant en évidence l'épaulement cylindrique.

Le dispositif doseur-distributeur selon l'invention est constitué par un soubassement (figure 1, B). Ce soubassement du compartiment comporte quatre parois latérales rectangulaires 2, une paroi inférieure 3 ou fond. Ce soubassement est divisé en deux compartiments 8 et 9 par une paroi intérieure 10, située dans un plan parallèle au fond 3 et proche de celui-ci. Cette paroi intérieure 10 présente une ouverture circulaire centrale qui se prolonge par un cylindre 6 faisant saillie à l'extérieur. Les dimensions intérieures du cylindre 6 permettent d'emboîter dans celui-ci un emballage de type connu qui contient le produit à distribuer.

Un tiroir 11 coulisse dans le compartiment 8, délimité par le fond 3 et la cloison 10. Pour permettre ce coulissement, l'extrémité inférieure de la paroi avant 5, correspondant à ce compartiment 8, est supprimée. La face arrière 4 du soubassement B est percée d'un orifice circulaire 7 au niveau du compartiment 8 permettant le passage et le coulissement d'un poussoir automatique, installé derrière la face arrière 4 du soubassement B sur les appareils à fonctionnement automatique. Ce poussoir automatique a pour fonction de provoquer l'ouverture du tiroir 11 en exerçant une pression sur un doigt 21 disposé sur la paroi arrière du tiroir 11 et qui fait saillie et obstrue l'orifice 7 lorsque le tiroir 11 est en position fermée. Ce tiroir 11 comporte une paroi frontale 12, une paroi arrière 13 et deux parois latérales 14. Il est divisé en logements 15, 16 et 17 occupant la moitié avant du tiroir 11, alors que le logement 15 occupe la moitié arrière. Ce logement 15 est recouvert par une paroi supérieure 19.

Une nervure de préhension 20 est fixé le long de la paroi frontale 12 du tiroir 11. La paroi arrière 13 du tiroir 11 présente un doigt 21 qui fait saillie à l'extérieur. Le tiroir 11 coulisse dans le compartiment 8 guidé par deux réglettes 22, son compartiment 15 se déplaçant dans la partie arrière du compartiment 8. Ce tiroir 11 peut prendre deux positions extrêmes:

position "fermée": le tiroir est à l'intérieur du compartiment 8

position "ouverte": les logements 16 et 17 sont à l'extérieur du compartiment 8 (figure 2).

La paroi intérieure 10 présente un orifice central 23 qui met en communication les compartiments 8 et 9, le tiroir étant en position fermée, le compartiment 9 communique avec le logement 16 du tiroir 11. Sur sa face opposée au compartiment 8, la cloison 10 porte une paroi cylindrique qui entoure l'orifice 23. Celu-ci est semi-circulaire. Une paroi, plane ou bombée, délimitée par le guide cylidrique 6 est située au-dessus de l'orifice 23.

L'utilisation du dispositif est la suivante: le produit à distribuer est contenu dans un emballage de type connu que l'on emboîte dans le guide cylindrique 6 qui fant saillie dans le compartiment 9 du soubassement 1. L'épaulement cylindrique 26 de l'emballage-récipient distributeur 27 épouse le contour extérieur de la paroi 24. Des languettes flexibles 28, solidaires des parois latérales 2 du soubassement 1, bloquent l'épaulement cylindrique 26 autour de la paroi 24.

Pour obtenir une dose de produit, on fait coulisser le tiroir 11 dans son compartiment 8; il peut être manoeuvrer manuellement en excerçant une traction sur la nervure de préhension 20, ou il peut être poussé par le doigt d'un dispositif, non représenté sur les figures, placé derrière le distributeur, ce doigt exerçant une pression sur le doigt (21) du tiroir (11).

Quand le tirior est en position fermée, la poudre contenue dans l'emballage tombe par gravité dans le logement 16 du tiroir à travers l'orifice 23. La présence d'une paroi bombée supprime les risques de formation d'une voûte dans la poudre au fur et à mesure de son utilisation. Le logement 16 étant plein, il ne peut pas descendre de produit pendant le mouvement de ''sortie'' du tiroir. Quand le logement 16 n'est plus en correspondance avec l'orifice 23, celui-ci est obturé par la paroi 19 du logement 15. Aucun mouvement de produit n'est encore possible dans l'emballage. Dès que l'ouverture du tiroir est suffisante, le logement 17 se vide. En fin de course du tiroir, le logement 16 est complètement à l'extérieur du dispositif, le vidage est donc complet. Cette fin de course est déterminée par la mise en butée du doigt 29 contre le bord du fond 13 du tiroir 11. Des moyens élastiques (non représentés) replacent le tiroir 11 dans le compartiment 8: on retrouve la position ''fermée''.

Dès que la paroi 19 n'obture plus l'orifice 23, le logement 16 commence à se remplir. Le logement 17 n'a aucun rôle actif, la paroi 18, qui le sépare du logement 16, limite le volume de celui-ci, en fonction de la dose distribuée de produit et de façon qu'aucun coin du logement 16 ne soit trop éloigné de l'orifice de remplissage 23, limitant ainsi le foisonnement.

Avec un tel distributeur-doseur, il n'y a pas de chute de produit pendant le mouvement de sortie du tiroir doseur. La quantité de produit délivrée est donc bien connue puisqu'elle correspond exactement au volume du logement 16. Les boissons, obtenues à partir d'appareils équipés de ce dispositif, seront toujours bien dosées. Un autre avantage de ce dispositif est de s'adapter à n'importe quel appareil de distribution, le tiroir pouvant soit être tiré, notamment par la nervure 20, soit poussé par un grand nombre de dispositifs pousseurs utilisés au travers de l'orifice 7 aménagé dans la paroi arrière 4 du soubassement 1.

Le produit à distribuer peut être quelconque, notamment, comme indiqué plus haut, une poudre déshydratée pour la préparation de boissons, mais aussi des produits granulés tel que du café, du savon ou autre. Le produit peut être contenu dans tout récipient s'adaptant sur le guide cylindrique 6.

On ne sortirait pas du cadre de l'invention en réalisant autrement le guide cylindrique 6 ou le soubassement 1. Le soubassement de l'ensemble récipient-distributeur doseur comporte deux ergots 31 sur la face arrière du soubassement 1 qui rendent l'ensemble autoportant. Ces ergots 31 permettent d'accrocher l'ensemble récipient-distributeur doseur à l'importe quel appareil distributeur de boissons, par l'intermédiaire d'une plaquette d'adaptation 32 fixée par des vis ou par ruban adhésif ou autre. Cette plaquette 32 comporte des glissières latérales dans lesquelles viennent s'insérer les ergots 31, ainsi qu'un arrêtoir-butée 33 retenant l'ensemble récipient distributeur-doseur en position de service (figure 6, glissières latérales 34).

## Revendications

1. Dispositif doseur-distributeur, notamment pour des produits en poudre, formé par un emballage ou récipient (27) qui contient le produit et un distributeur tiroir-doseur placé sous le récipient et communiquant avec lui par une ouverture centrale (23), le déplacement d'un tiroir (11) à l'intérieur du tiroir-doseur permettant le remplissage du tiroir (11) par simple gravité, le tiroir-doseur comportant un soubassement (B) divisé en deux compartiments (8, 9) par une paroi intérieure situé dans un plan parallèle au fond (3) et renfermant l'ouverture centrale, le premier compartiment (9) comportant une paroi cylindrique (24) constituant le prolongement de l'ouverture centrale (23) et faisant saillie à l'extérieur, la dimension interne de la paroi cylindrique (24) permettant d'emboiter dans celle-ci l'emballage ou le récipient (27) du type connu qui contient le produit à distribuer, le tiroir (11) étant placé dans le second compartiment (8) placé au-dessous du premier compartiment (9) et comportant un élément permettant un déplacement manuel du tiroir caractérisé par le fait que cet élément est une nervure de préhension (20) faisant saillie et actionnée par traction, tandis qu'à la surface opposée à la nervure de préhension (20), le soubassement (B) est percé d'un orifice circulaire (7) au niveau du deuxième compartiment (8) permettant le passage et le coulissement d'un doigt d'un dispositif pousseur installé derrière le soubassement (B) sur le distributeur automatique.

2. Dispositif doseur-distributeur selon la revendication 1 caractérisé par le fait que le doigt du dispositif pousseur exerce une pression sur un doigt (21) disposé sur la paroi arrière dudit tiroir (11), ce doigt (21) faisant saillie à l'extérieur et obstruant l'orifice (7) lorsque le tiroir (11) est en position fermée.

3. Dispositif doseur-distributeur selon l'une quelconque des revendications 1 ou 2 caractérisé par le fait que le tiroir, qui est guidé par deux réglettes (22), comporte trois logements (15, 16, 17) et peut prendre deux positions extérieures: une position ''fermée'', le tiroir étant à l'intérieur du compartiment (8) et le logement (15) se plaçant dans la partie arrière du compartiment (8), une position ''ouverte'', les logements (16, 17) étant à l'extérieur du compartiment (8).

4. Dispositif doseur-distributeur selon l'une quelconque des revendications 1, 2 ou 3 caractérisé par le fait que le tiroir étant en position fermée, le compartiment (9) communique avec le logement (16) par l'ouverture centrale (23), et qu'une paroi plane ou bombée, délimitée par le guide cylindrique (6) est située au-dessus de l'ouverture centrale (23), celle-ci possédant de la sorte une forme semi-circulaire.

## Patentansprüche

1. Spender-Dosiereinrichtung, insbesondere für pulverförmiges Material, gebildet aus einer Umhüllung oder einem Behälter (27), der das Material und einen Spender-Dosierschieber aufweist, der unter dem Behälter angeordnet ist und mit ihm über eine zentrale Öffnung (23) in Verbindung steht, wobei das Verschieben einer Schublade (11) im Inneren des Dosierschiebers das Auffüllen der Schublade (11) durch einfache Schwerkraft erlaubt, wobei der Dosierschieber ein Fundament (B) aufweist, das in zwei Fächern bzw. Abteilungen (8, 9) durch eine innere Seitenwand aufgeteilt ist, die in einer parallelen Ebene zum Unterteil (3) angeordnet ist und die zentrale Öffnung umschließt, wobei die erste Abteilung (9) eine zylindrische Seitenwand (24) aufweist, die die Verlängerung der zentralen Öffnung (23) und einen Vorsprung nach außen bildet, wobei die innere Abmessung der zylindrischen Seitenwand (24) erlaubt, in ihr die Umhüllung oder den Behälter (27) des bekannten Typs aufzunehmen, der das Spendermaterial beinhaltet, wobei die Schublade (11) in der zweiten Abteilung (8) angeordnet ist, die unterhalb der ersten Abteilung (9) angeordnet ist, und ein Element aufweist, das eine manuelle Verschiebung der Schublade erlaubt, dadurch gekennzeichnet, daß dieses Element eine Greifrippe (20) ist, die vorspringt und durch Ziehen betätigtbar ist, während an der Greifrippe (20) gegenüberliegenden Oberfläche das Fundament (B) von einer kreisförmigen Öffnung (7) auf der Höhe der zweite Abteilung (8) durchsetzt ist, die das Hindurchtreten und die Verschiebung eines Fingers einer Schubvorrichtung erlaubt, die hinter dem Fundament (B) auf dem automatischen Spender angeordnet ist.

2. Spender-Dosiereinrichtung nach Anspruch 1, dadurch gekennzeichnet, daß der Finger der Schubvorrichtung einen Druck auf einen Finger (21) ausübt, der an der hinteren Seitenwand der Schublade (11) angeordnet ist, wobei der Finger (21) nach außen vorspringt und die Öffnung (7) versperrt, wenn die Schublade (11) in geschlossener Stellung ist.

3. Spender-Dosiereinrichtung nach einem der Ansprüche 1 oder 2, dadurch gekennzeichnet,

daß die Schublade, die durch zwei Leisten (22) geführt ist, drei Lagerräume (15, 16, 17) aufweist und zwei äußere Stellungen einnehmen kann:

eine "geschlossene" Stellung, wobei die Schublade im Inneren der Abteilung (8) befindet und der Lagerraum (15) sich im hinteren Abschnitt des Lagerraums (8) befindet,

eine "offene" Stellung, wobei die Lagerräume (16, 17) sich außerhalb der Abteilung (8) befinden.

4. Spender-Dosiereinrichtung nach einem der Ansprüche 1, 2 oder 3, dadurch gekennzeichnet, daß, wenn sich die Schublade in der geschlossenen Stellung befindet, die Abteilung (9) durch die zentrale Öffnung (23) mit dem Lagerraum (16) in Verbindung steht, und daß eine ebene oder gewölbte Seitenwand die durch die zylindrische Führung (6) begrenzt ist, oberhalb der zentralen Öffnung (23) angeordnet ist, wobei diese eine halbkreisförmige Ausbildung aufweist.

## Claims

1. Dispensing/metering device, especially for powdery material, formed from an envelope or container (27) including the material and a dispensing/metering slide which is disposed beneath the container and is communicated therewith via a central opening (23), wherein the displacement of a drawer (11) in the interior of the metering slide permits filling of the drawer (11) by simple gravity, the metering slide including a base (B) which is divided by an interior sidewall into two compartments (8, 9), said sidewall being disposed in a plane parallel to the lower portion (3) and enclosing the central opening, wherein the first compartment (9) has a cylindrical sidewall (24) forming the extension of the central opening (23) and an outward projection, wherein the inner dimension of the cylindrical sidewall (24) permits accommodation therein of the envelope or container (27) of known type which holds the material to be dispensed, wherein the drawer (11) is provided in the second compartment (8) which is disposed beneath the first compartment (9) and has an element permitting manual displacement of the drawer, characterised in that said element is a gripping rib (20) which protrudes and is operable by pulling, whereas at the surface opposite the gripping rib (20) a circular opening (7) at the level of the second compartment (8) extends through the base (B), said opening permitting passage and displacement of a finger of a pushing means which is provided behind the base (B) on the automatic dispensing device.

2. Dispensing/metering device as claimed in claim 1, characterised in that the finger of the pushing means exerts pressure on a finger (21) mounted on the rear side-wall of the drawer (11), wherein the finger (21) protrudes outwardly and blocks the opening (7) when the drawer (11) is in its closed position.

3. Dispensing/metering device as claimed in any one of the claims 1 or 2, characterised in that the drawer, which is guided by means of two ledges (22), comprises three storage spaces (15, 16, 17) and is adapted to take two exterior positions:

a "closed" position in which the drawer is in the interior of the compartment (8) and the storage space (15) is in the rear portion of the compartment (8),

an "open" position in which the storage spaces (16, 17) are outside of the compartment (8).

4. Dispensing/metering device as claimed in any one of the claims 1, 2 or 3, characterised in that, when the drawer is in its closed position, the compartment (9) is communicated with the storage space (16) by way of the central opening (23), and that a planar or arcuate sidewall, which is defined by the cylindrical guide member (6), is provided above the central opening (23), the latter having semi-circular configuration.

**EP 0 077 861 B1**

FIG. 1

FIG. 2

EP 0 077 861 B1

FIG. 3

FIG. 4

FIG. 5

2

FIG.7

27

24

26

FIG.6

32

34

33